# EUROPÄISCHE PATENTANMELDUNG

(11) **EP 2 060 377 A2**
(43) Veröffentlichungstag der Anmeldung: **20.05.2009**
(21) Anmeldenummer: 08168984.6
(22) Anmeldetag: 13.11.2008
(51) Int. Cl.: B29C 44/04, B29C 44/12

(54) **Wannenaufbau sowie Verfahren zur Erstellung eines Wannenaufbaus**

(30) Priorität: 16.11.2007 DE 102007054531; 09.04.2008 DE 102008018115
(71) Anmelder: Illbruck Sanitärtechnik GmbH, 34537 Bad Wildungen (DE)
(72) Erfinder: Bolsmann, Christian, 34281, Gudensberg (DE); Iglhaut, Karl, 34560, Fritzlar (DE); Wagenfeldt, Jens, 34537, Bad Wildungen (DE); Holzmann, Werner, 4501, Neuhofen (AT); Holzmann, Erich, 4053, Haid (DE)
(74) Vertreter: Müller, Enno

(57) **Zusammenfassung**

Die Erfindung betrifft ein Verfahren zur Erstellung eines Wannenaufbaus (1), insbesondere eines Duschwannenaufbaus mit einer Wannenform (2) und einem, eine Ablaufaussparung (11) oder eine Vorbereitung hierzu und / oder einen Abfluss (8) aufweisenden Trägerteil (T), insbesondere eines bodenebenen Duschwannenaufbaus (1), wobei ein randseitig überstehendes Dichtband (12) eingebunden wird. Um ein Verfahren der in Rede stehenden Art weiter zu verbessern, wird vorgeschlagen, dass die Wannenform (2) einen Rand, insbesondere eine Randabwinklung (3) aufweist und dass die Wannenform (2) mit einem gesonderten Trägerunterteil (7) verbunden wird, wobei ein verbleibender Hohlraum zwischen Wannenform (2) und Trägerunterteil (7) mit einem Schaumstoff niedriger Dichte (B) ausgeschäumt wird, wobei weiter die Ausschäumung mit einem Schaumstoff höherer Dichte (A) durch Einbringen eines Polyurethan-Werkstoffs mit elastomeren Eigenschaften ersetzt sein kann. Des Weiteren betrifft die Erfindung einen entsprechenden Wannenaufbau (1).

## Beschreibung

Die Erfindung betrifft zunächst ein Verfahren zur Erstellung eines Wannenaufbaus, insbesondere eines Duschwannenaufbaus, mit einer Wannenform und einem, eine Abflussaussparung oder eine Vorbereitung hierzu und / oder einen Abfluss aufweisenden Trägerteil, insbesondere eines bodenebenen Duschwannenaufbaus, wobei die Wannenform hinterschäumt wird und ein randseitig überstehendes Dichtband eingebunden wird.

Verfahren der in Rede stehenden Art sind bekannt. Diese dienen bspw. zur Herstellung von bodenebenen Duschwannen, d.h. Duschwannen, deren Nutzfläche zumindest annähernd in die umgebende Fußbodenebene eingepasst ist.

Im Hinblick auf den bekannten Stand der Technik wird eine Problematik der Erfindung darin gesehen, ein Verfahren der in Rede stehenden Art weiter zu verbessern.

Diese Problematik ist zunächst und im Wesentlichen dadurch gelöst, dass die Wannenform einen Rand, insbesondere eine Randabwinklung aufweist und dass zunächst die Wannenform jedenfalls im Bereich des Dichtbands mit einem Schaumstoff, bevorzugt einem Schaumstoff höherer Dichte, ausgeschäumt oder angeschäumt wird und dass sodann die ausgeschäumte oder angeschäumte Wannenform mit einem gesonderten Trägerunterteil verbunden wird, wobei ein verbleibender Hohlraum zwischen Wannenform und Trägerunterteil mit einem Schaumstoff niedrigerer Dichte ausgeschäumt wird, wobei weiter die Ausschäumung oder Anschäumung mit einem Schaumstoff höherer Dichte durch Einbringen eines Polyurethan-Werkstoffs mit elastomeren Eigenschaften ersetzt sein kann. Soweit der Wannenrand nicht abgewinkelt ist oder nur wenig abgewinkelt ist, ist bevorzugt von Anschäumen gesprochen, da in diesem Fall jedenfalls die Anschäumung bevorzugt bis deutlich vertikal unterhalb des äußersten Randes der Wannenform vorgenommen wird. Es ist demzufolge ein Verfahren angegeben, welches den bspw. bodenebenen Einbau beliebiger Wannenformen, insbesondere solcher mit Randabwinklung ermöglicht. Der unterseitig der Wannenform-Nutzseite durch die Randabwinklung begrenzte Raum wird ggf. vollständig ausgeschäumt, dies weiter berücksichtigend einen Ablauf bzw. eine Vorbereitung zur Aufnahme eines Ablaufes für die Wannenform. Das die Abdichtung der Duschwanne zum umgebenden Boden hin erbringende Dichtband erstreckt sich bevorzugt unmittelbar unter einer durch die freie Randkante der Randabwinklung aufgespannten Ebene. Bedingt durch das Ausschäumen kann das Dichtband in vorteilhafter Weise in das geschäumte Trägeroberteil integriert sein, dies durch Anschäumen oder Umschäumen des in einem Grundriss von der Wannenform überdeckten Dichtbandabschnittes. Die Standfläche des Trägeroberteils kann zufolge dieses Verfahrens höhenmäßig beabstandet zur umlaufenden Randkante der Randabwinklung sein. Das umlaufende Dichtband bzw. die einzelnen, einer jeden Seite der Wannenform zugeordneten Dichtbänder sind unverlierbar an dem Trägeroberteil und über dieses zufolge der jedenfalls randabwinklungsseitigen Ausschäumung auch mit der Wannenform verbunden. Wannenform, Dichtband bzw. Dichtbänder sowie Trägeroberteil bilden eine Baueinheit. Diese wird werksseitig, aber auch ggf. baustellenseitig mit dem Trägerunterteil verbunden, welches bevorzugt grundflächenangepasst ist an das Trägeroberteil, zufolge dessen eine annähernd vollflächige Abstützung erreicht ist. Das Trägerunterteil dient zugleich als Distanzstück zur Anhebung des Trägeroberteils mit der Wannenform auf bspw. Fertigfußbodenniveau. Trägerunterteil und Trägeroberteil sind zumindest im Einbauzustand miteinander verbunden, so bspw. klebeverbunden, dies weiter bevorzugt vollflächig. Darüber hinaus kann alternativ oder auch zusätzlich zu einer solchen Klebeverbindung eine Formschlussverbindung zwischen Trägeroberteil und Trägerunterteil vorgesehen sein. Die Ausschäumung des das Dichtband einfassenden Bereichs muss nicht zwingend mit einem Schaumstoff höherer Dichte vorgenommen werden. Ebenso ist auch nicht zwingend, den verbleibenden Hohlraum zwischen Wannenform und Trägerunterteil auszuschäumen, weiter auch nicht zwingend mit einem Schaumstoff niedriger Dichte. Insofern können diese Merkmale auch ggf. in Anspruch 1 gestrichen werden. Das Ausschäumen insbesondere des Randbereichs mit einem Schaumstoff höherer Dichte kann darüber hinaus auch durch Einbringen eines elastomere Eigenschaften aufweisenden Polyurethan-Werkstoffs ersetzt sein. Dieser weist hierbei bevorzugt eine Konsistenz auf, die zu einer verbesserten Körperschall-Entkopplung führt. So kann diesbezüglich eine gelartige Konsistenz vorliegen, wie sie bspw. von Fahrradsätteln oder dergleichen bekannt ist. Dieser Polyurethanschaumstoff, der in seiner Eigenschaft auch als radiergummiartig elastisch aber zugleich massiv beschrieben sein kann, und Raumgewichte im Bereich von beispielsweise 500 bis 600 kg/m³ aufweisen kann, kann alternativ auch außerhalb des Randbereichs, im Mittelbereich der Wannenform, unmittelbar unterhalb der Wannenform, vorgesehen sein oder auch im Mittelbereich und im Randbereich, also praktisch vollflächig unterhalb und unmittelbar angrenzend an die Wannenform. Hierbei kann er eine Dicke im Bereich von beispielsweise 2 bis 20 mm aufweisen.

Weiter betrifft die Erfindung ein in Rede stehendes Verfahren, welches dadurch verbessert ist, dass das bevorzugt horizontal unter der Randabwinklung herausgeführte Dichtband mittels eines Klemmstücks, klebend und dichtend mit dem Trägerteil verbunden wird, wobei ein so vorbereitetes Trägeroberteil wahlweise, ggf. erst auf einer Baustelle, mit einem gesonderten Trägerunterteil verbunden wird. Das Klemmstück kann hierbei als gesondert hergestelltes Teil, insbesondere Schaumstoffteil, vorliegen; alternativ aber auch erstellt durch Hinterschäumen der Wannenform-Randabwinklung. Ein ggf. sich unter der Wannenform einstellender Hohlraum kann mit einem Schaumstoff ausgefüllt werden. Alternativ kann auch ein Stufenabschnitt des Trägerunterteils den Hohlraum füllen. Die Merkmale des nebengeordneten Anspruchs 2 sind sowohl für sich als auch in Kombination mit den Merkmalen des Anspruchs 1 von Bedeutung.

Weitere Merkmale der Erfindung sind nachstehend, auch in der Figurenbeschreibung, oftmals in ihrer bevorzugten Zuordnung zum Gegenstand des Anspruches 1 und / oder des Anspruchs 2 oder zu Merkmalen weiterer Ansprüche erläutert. Sie können aber auch in einer Zuordnung zu nur einzelnen Merkmalen des Anspruchs 1 und / oder des Anspruchs 2 oder des jeweiligen weiteren Anspruches oder jeweils unabhängig von Bedeutung sein.

So ist in einer vorteilhaften Weiterbildung des Erfindungsgegenstandes vorgesehen, dass die Ausschäumung mittels eines Polyurethan-Schaumstoffes durchgeführt wird, welcher geschäumte Körper dann das Trägeroberteil bildet. Das Trägerunterteil besteht bevorzugt aus einem Partikelschaumstoff, weist bevorzugt ein Raumgewicht im Bereich von etwa 25 - 110 kg/m³ auf. Hierbei ist insbesondere bei recht hohen Raumgewichten, also 60 kg/m³ oder mehr, insbesondere 80 kg/m³ oder mehr auch bereits eine unmittelbar sich ergebende Wasserdichtigkeit des Trägerunterteils erreicht. So kann weiter das Trägerunterteil aus einem Partikelschaumstoff wie etwa EPP oder EPS bestehen, weiter auch aus XPS oder Polyurethanschaumstoffe.

Auch kann das Dichtband in seinem von der Ausschäumung umfassten, einem zentralen Bereich der Wannenform zugewandten Querschnitts-Endbereich gekrümmt verlaufen. Dies insbesondere zufolge des Ausschäumvorganges. Der seitlich nach außen überragende wesentliche Dichtbandabschnitt ist hiervon unberührt. Dieser kann den baulichen Gegebenheiten angepasst frei verlegt werden. Der umschäumte, d.h. in dem Trägeroberteil eingefasste Dichtbandabschnitt steigt entsprechend in einem Querschnitt mit zunehmender Erstreckung in Richtung auf den zentralen Bereich der Wannenform an.

Die Ausschäumung des Hohlraumes wird in einer Weiterbildung des Erfindungsgegenstandes mit unterschiedlichen Dichten vorgenommen, dies weiter unter Verwendung eines gemeinsamen Grund-Schaumstoffes, nämlich Polyurethan. Die Ausschäumung der Zonen unterschiedlicher Dichte kann nacheinander erfolgen. Denkbar ist diesbezüglich auch ein gleichzeitiges Ausschäumen. So ist bevorzugt vorgesehen, dass im Bereich der Dichtbandeinfassung, d.h. weiter im umlaufenden Randbereich der Wannenform ein Schaumstoff höherer Dichte vorgesehen ist als im zentralen Bereich. So kann bspw. der Bereich höherer Dichte durch ein Anschäumen mit einem Polyurethanschaum mit einem Raumgewicht von 60 - 100 kg/m³ erfolgen, während im zentralen Bereich der Wannenform ein Polyurethanschaum mit einem Raumgewicht von 6 - 30 kg/m³ Anwendung findet. Entsprechend kann das Raumgewicht des Schaumstoffbereiches höherer Dichte an das Raumgewicht des Trägerunterteils heranreichen. So kann weiter das Trägerunterteil aus einem Partikelschaumstoff wie etwa EPP oder EPS bestehen, weiter auch aus Schaumstoffen wie XPS oder Polyurethan.

Der Polyurethanschaum geringer Dichte kann bspw. gleich dem Schaumstoff höherer Dichte in flüssiger bzw. fließfähiger Form, so insbesondere in Form eines Polyurethan-Reaktionsgemisches, eingebracht werden, wonach praktisch unmittelbar ein Aufschäumen erfolgt.

Die Dichte des Schaumstoffs geringer Dichte kann auch 6 bis 8 kg/m³ betragen, womit eine "watteartige" Ausfüllung des zentralen Bereichs erreicht wird. Diese Form der Ausfüllung liefert - ggf. auch im Zusammenhang mit einem Ausfüllen des Randbereichs mit einem elastomeren Polyurethan-Werkstoff - schalltechnisch günstige Werte.

Weiter ist bevorzugt, dass die Wannenform vollständig, ggf. lediglich unter Belassung eines Freiraumes für den Abfluss, ausgeschäumt ist. Entsprechend stützt sich die Wannenform mit der gesamten Fläche auf dem so geschaffenen Trägeroberteil ab. Weiter sind hierdurch auch Hohlräume vermieden.

In einer Weiterbildung ist vorgesehen, dass zunächst im Bereich des Dichtbandes eine Ausschäumung mit einem Schaumstoff höherer Dichte durchgeführt wird, so insbesondere mittels eines Polyurethanschaums mit einem Raumgewicht von 60 -100 kg/m³. Im Zuge dieser Ausschäumung des zugleich der Randabwinklung der Wannenform zugeordneten Bereiches kann zugleich eine Fassung des Dichtbandes erreicht werden, zur unverlierbaren Halterung des Dichtbandes an dem so geschaffenen Trägeroberteil bzw. an der Wannenform. Alternativ kann das Dichtband auch vor einem Ausschäumen des zugeordneten Randbereiches randabwinklungsseitig der Wannenform festgelegt sein, so bspw. durch Verklebung mit der Randabwinklung.

Die Ausschäumung im Bereich des Dichtbandes bzw. dem der Randabwinklung der Wannenform zugeordneten Bereichs kann in einer weiteren Ausgestaltung nach Aufsetzen eines Rahmenteils durchgeführt werden. Dieses Rahmenteil ist der der Wannenfläche abgewandten Randkante der Randabwinklung der Wannenform zugeordnet, weist jedoch bevorzugt gegenüber der Randabwinklung, weiter bevorzugt Richtung innen eine Querschnittsvergrößerung auf. Bei einer bevorzugten fluchtenden Ausrichtung der Vertikalaußenflächen von Rahmenteil und Randabwinklung bzw. bei einer diesbezüglichen Rückversetzung des Rahmenteils nach innen ergibt sich innenseitig der Randabwinklung eine Stufe. Der dadurch geschaffene, sich bevorzugt nur nach horizontal innen öffnende Raum innenseitig der Randabwinklung wird jedenfalls zur teilweisen Ausschäumung der Wannenform mit einem Schaumstoff höherer Dichte ausgefüllt. Das zugleich ein Trägerteil bildende Rahmenteil formt in diesem Zusammenhang eine verlorene Schalung. Das Dichtband wird vor einer Ausschäumung in einer Ausgestaltung zunächst mit der der Wannenform zugeordneten Fläche des Rahmenteils verklebt.

Weiter ist diesbezüglich bevorzugt, dass nach einem Ausschäumen des Dichtbandbereiches das Trägerunterteil direkt auf die Randabwinklung oder alternativ, wie beschrieben, bei Zwischenschaltung eines Rahmenteils auf dem Rahmenteil aufgesetzt wird und die Ausschäumung im verbleibenden Bereich (mittiger, vom Dichtbandbereich umschlossener Bereich) zwischen dem Trägerunterteil und der Wannenform durchgeführt wird. Die Ausschäumung des hiernach allseitig umschlossenen zentralen Hohlraumes erfolgt in weiter bevorzugter Ausgestaltung unter Verspannung der Teile, insbesondere von Trägerunterteil und Wannenform bzw. von Trägerunterteil und mit dem Rahmenteil versehener Wannenform. Das Ausschäumen wird hierbei bevorzugt durch in dem Trägerunterteil vorgesehene Schaumdurchtrittsöffnungen durchgeführt.

Alternativ kann auch die Zusammenfassung von Wannenform und darunter angebrachtem Rahmenteil zunächst ausgeschäumt werden. Und zwar im Hinblick auf die unterschiedlichen Schäume, also bevorzugt randseitig eine schaumhöhere Dichte und in der Mitte bevorzugt eine schaumgeringere Dichte. Die danach gegebene unregelmäßige Fläche innerhalb oder gegebenenfalls unterseitig auch teilweise oder vollständig überdeckend die Stirnfläche des Rahmenteils, kann dann weiter mittels eines Trennschnitts ebenflächig gemacht werden. Ein solcher Trennschnitt kann beispielsweise mittels eines gespannten Heizdrahtes vorgenommen werden, gegenüber dem die so gebildete Zusammenfassung horizontal verschoben wird.

Eine weitere bevorzugte Maßnahme bezüglich des Ausschäumens der Wannenform von unten, unabhängig von den sonstigen Merkmalen oder in Kombination mit einem oder mehreren der hier insoweit beschriebenen Merkmale, besteht auch darin, die Wannenform, insbesondere wenn es sich um eine Stahlwannenform handelt, auf der rückseitigen Oberfläche mit einem die Verhaftung des Schaumes an der Wannenform unterstützenden Mittel zu versehen. Ein solches Mittel kann etwa in einer, bevorzugt dann geschlossen umlaufenden, Kleberschicht bzw. Dichtstoffschicht bzw. Kleberraupe bestehen. Es kann sich auch um ein Selbstklebeband handeln. Beispielsweise auch um ein Band, das so ausgebildet ist wie die hier beschriebenen Dichtbänder, das entsprechend mit einer Selbstkleberschicht versehen ist oder mittels einer Kleberpaste mit der Unterseite der Wannenform verbunden wird. Die freiliegende, eine gewisse Rauhigkeit aufweisende Oberseite eines solchen Bandes unterstützt dann wirksam die Verhaftung des Schaumstoffes mit der Unterseite der Wannenform.

Die im übertragenen Sinne schichtweise übereinander angeordneten Abschnitte des Duschwannenaufbaus (Trägerunterteil, ggf. Rahmenteil und Wannenform) können im Bereich ihrer aufeinanderliegenden Flächen miteinander verklebt sein. In bevorzugter Weise ist die Verhaftung der Teile zueinander allein durch das Ausschäumen mit Polyurethan erreicht, dies weiter bevorzugt unter Verspannung der Teile zueinander.

Die Erfindung betrifft des Weiteren einen Wannenaufbau, insbesondere einen Duschwannenaufbau, vorzugsweise einen bodenebenen Duschwannenaufbau, mit einer Wannenform und einem, eine Abflussaussparung oder eine Vorbereitung hierzu und / oder einen Abfluss aufweisenden Trägerteil, wobei die Wannenform vorzugsweise hinterschäumt ist und ein randseitig überstehendes Dichtband eingebunden ist.

Wannen, wie etwa Badewannen, insbesondere aber auch Duschwannen der in Rede stehenden Art, sind, wie eingangs beschrieben, bekannt.

Um einen derartigen Wannenaufbau verbessert auszugestalten, weiter insbesondere zur individuellen Anpassung zum Einbau als bodenebenen Duschwannenaufbau weiterzubilden, ist vorgesehen, dass das Trägerteil zweiteilig ausgebildet ist, wobei ein Trägeroberteil und ein Trägerunterteil gesondert ausgebildet sind, und dass das Dichtband in einer Trennebene zwischen dem Trägeroberteil und dem Trägerunterteil eingebunden ist, oder in eines der Teile, bevorzugt das Trägeroberteil, eingefügt, insbesondere eingeschäumt ist. Es ist ein modularer Aufbau geschaffen, in den günstig und vorteilhaft dichtend das Dichtband eingebunden ist. Das Trägeroberteil und/ oder das Trägerunterteil können grundsätzlich rahmenartig umlaufend als geschlossene Teile, bevorzugt hinsichtlich jedenfalls des Trägeroberteils zumindest teilweise, bevorzugt vollständig durch Anschäumen oder Ausschäumen, gebildet sein.

Besonders bevorzugt ist eine solche Gestaltung, wenn die Wannenform eine Randabwinklung aufweist. Diese kann etwa in U-förmig gebogener Form vorliegen. Insbesondere ist auch für das so gebildete Trägerunterteil und/ oder Trägeroberteil ein Schaumstoff höherer Dichte vorgesehen. Das Dichtband kann vorteilhaft durch Ausschäumen bzw. Umschäumen mit einem Schaumstoff höherer Dichte eingebunden sein.

Weiter kann in einer Fortbildung vorgesehen sein, dass ein zentraler Bereich des Trägeroberteils und/oder des Trägerunterteils im Vergleich zu dem jeweiligen Außenbereich dieses Teils durch einen Schaumstoff geringerer Dichte gebildet ist. Hierdurch ist einerseits eine günstige Handhabung ermöglicht, denn der Bereich des Schaumstoffs geringerer Dichte kann leicht individuell bearbeitet werden, etwa zur besonderen Verlegung eines Rohres. Andererseits ist eine vollständige Auskleidung geschaffen, die etwa unliebsamen Kondensationserscheinungen in diesem Bereich entgegenwirken kann. Bei angeschäumtem Trägeroberteil ist dieses zugleich hierdurch mit der Wannenform verhaftet. Es hat sich auch gezeigt, dass ein solcher -zentraler- Bereich aus Schaumstoff geringerer Dichte auch in schalttechnischer Hinsicht eine Verbesserung erreichen lässt. Beide Teile, die Wannenform und das Trägeroberteil, bilden somit ein Montageelement, welches zudem das randseitig überstehende Dichtband unverlierbar haltert. Das so vorbereitete Montage-Wannenelement wird einem gesonderten Trägerunterteil zugeordnet. Dessen Höhe wird entsprechend der vorgegebenen Gesamtbauhöhe des Wannenaufbaus, also bspw. des Duschwannenaufbaus, gewählt. Die Anschäumung zur Bildung des Trägeroberteils erfolgt werkseitig. Hiernach kann auch bereits werkseitig die Zuordnung des gesonderten Trägerunterteils vorgenommen werden. Alternativ geschieht dies erst baustellenseitig. Das Ausschäumen der Wannenform zur Bildung des Trägeroberteils wird weiter bevorzugt so vorgenommen, dass der geschaffene Schaumkörper unterseitig die Wannenform vollständig überdeckt, d.h. den durch die Wannenform begrenzten Hohlraum ausfüllt. Dies ggf. unter Belassung eines Freiraums zum Eingriff eines Teils des Abflusses. Der das Dichtband einfassende Bereich muss nicht zwingend mit einem Schaumstoff höherer Dichte ausgeschäumt sein. Ebenso ist es weder zwingend, den zentralen Bereich durch Ausschäumen mittels eines Schaumstoffes niedriger Dichte zu bilden, noch einen sich zwischen Wannenform und Trägerunterteil einstellenden Hohlraum auszuschäumen. Der weiter das Dichtband einbindende Bereich kann auch durch einen, elastomere Eigenschaften aufweisenden, Polyurethan-Werkstoff gebildet sein. Hierdurch ist eine verbesserte Körperschall-Entkopplung erreichbar, wobei die Konsistenz bis hin zu gelartig eingestellt sein kann.

Weiter betrifft die Erfindung einen Wannenaufbau, insbesondere Duschwannenaufbau der in Rede stehenden Art, welcher dadurch verbessert ist, dass das horizontal unter der Randabwinklung herausgeführte Dichtband mittels eines Klemmstücks klebend und dichtend mit dem Trägerteil verbunden ist und dass das so vorbereitete Trägeroberteil einem gesonderten Trägerunterteil zuordbar ist. Das Klemmstück kann hierbei als gesondert hergestelltes Teil, insbesondere Schaumstoffteil, vorliegen; alternativ aber auch erstellt durch Hinterschäumen der Wannenform-Randabwinklung. Ein ggf. sich horizontal innen zu dem Klemmteil unter der Wannenform einstellender Hohlraum kann mit einem Schaumstoff ausgefüllt werden. Alternativ kann auch ein Stufenabschnitt des Trägerunterteils den Hohlraum füllen.

In einer vorteilhaften Weiterbildung des Erfindungsgegenstandes ist vorgesehen, dass das Trägerunterteil die Ablauföffnung oder die Vorbereitung hierzu und / oder den Abfluss fortsetzt. Hierzu ist das Trägerunterteil mit entsprechenden Ausnehmungen und / oder Aussparungen zur Aufnahme des Abflusses bzw. zur Aufnahme von den Abfluss fortsetzenden Teilen, wie Geruchsverschluss und Ablaufleitung versehen. Auch kann das Trägerunterteil zur Zuordnung unterschiedlicher Abflusssysteme ausgelegt sein, wozu unterschiedliche, ggf. freilegbare Aussparungen bzw. Öffnungen vorgesehen sind.

In einer Weiterbildung des Erfindungsgegenstandes ist das Trägerunterteil mittels eines Rahmenteils mit dem Trägeroberteil verbunden. Ein solches Rahmenteil ist in bevorzugter Ausgestaltung materialgleich zu dem Trägerunterteil gewählt und belässt zufolge der rahmenartigen Ausgestaltung einen zentralen Freiraum, welcher ausgeschäumt ist bzw., wie vorstehend angesprochen, ausgeschäumt sein kann. Im übertragenen Sinne formen das in diesem Zusammenhang bevorzugt mit flächiger Erstreckung nach horizontal innen über das Rahmenteil hinausragende Trägerunterteil und das Rahmenteil eine Wanne zur Aufnahme des Schaummaterials. Entsprechend sind das Rahmenteil und / oder das Trägerunterteil im Sinne einer verlorenen Schalung für das Schaummaterial eingebunden.

Zum Ausschäumen des durch die Schalung mittels Rahmenteil und /oder Trägerunterteil geschaffenen zentralen Hohlraumes weist das Rahmenteil und / oder das Trägerunterteil eine oder mehrere Schaumdurchtrittsöffnungen auf. Durch diese wird der auszuschäumende Hohlraum beschickt. In bevorzugter Ausgestaltung sind diese Schaumdurchtrittsöffnungen trägerunterteilseitig im Bodenbereich desselben vorgesehen.

Das Dichtband kann als umlaufendes, seitlich überstehendes Band vorgesehen sein, welches mit dem dem zentralen Bereich der Wannenform zugewandten Querschnitts-Endbereich in dem geschaffenen Schaumstoff-Trägeroberteilkörper gefasst ist. Auch kann je Wannenformseite ein einzelnes Dichtband, d.h. bei üblicher quadratischer Grundrissgestaltung der Wannenform vier einzelne Dichtbänder, vorgesehen sein, die sich in den Eckbereichen der Wannenform im Bereich ihrer randseitig überstehenden Abschnitte überlappen. Alternativ besteht auch die Möglichkeit, dass das Dichtband ein Teilbereich einer durchgehenden Dichtfolie ist. Eine solche Dichtfolie weist eine Grundrissabmessung auf, die die der Wannenform übertrifft, zum randseitigen Überstand von Dichtbandabschnitten. Diese durchgehende Dichtfolie ist lediglich unterbrochen im Bereich eines ggf. vorgesehenen Freiraums zum Eintritt eines Abflussabschnittes. Insbesondere im Falle einer Badewanne, bei welcher in der Regel zumindest eine (Schmal- oder Lang-)seite nicht dichtend an ein umgebendes Mauerwerk im oberen Randbereich eingebunden ist, kann entsprechend vorgesehen sein, dass das Dichtband oder der Überstandsabschnitt der (durchgehenden) Dichtfolie nur ein-, zwei- oder dreiseitig vorgesehen ist.

Die Trennung zwischen Trägerunterteil und Trägeroberteil ist bevorzugt entlang einer durchgehenden horizontalen Ebene vorgesehen. Entsprechend liegt das Trägeroberteil bevorzugt in einer Horizontalebene vollflächig auf dem Trägerunterteil auf. Das Dichtband bzw. die Dichtfolie erstreckt sich in einer zu der Trennebene zwischen Trägerunterteil und Trägeroberteil distanzierten Ebene, nämlich weiter insbesondere in der durch die umlaufende Randkante der wannenformseitigen Randabwinklung aufgespannten Ebene. Alternativ ist die Trennung zwischen Trägerunterteil und Trägeroberteil im Sinne eines gegenseitigen Eingriffs der Teile gegeben, so bspw. durch eine Zapfenverbindung oder durch stufenförmige Formschlussverbindungen, womit eine Lagesicherung der Teile zueinander in Horizontalrichtung erreicht ist.

In einer vorteilhaften Weiterbildung des Erfindungsgegenstandes ist vorgesehen, dass die Ausschäumung mittels eines Polyurethan-Schaumstoffes durchgeführt ist, welcher geschäumte Körper dann das Trägeroberteil bildet. Das Rahmenteil und / oder das Trägerunterteil besteht bevorzugt aus einem Partikelschaumstoff, weist bevorzugt ein Raumgewicht im Bereich von etwa 25 - 110 kg/m³ auf. Hierbei ist insbesondere bei recht hohen Raumgewichten, also 60 kg/m³ oder mehr, insbesondere 80 kg/m³ oder mehr auch bereits eine unmittelbar sich ergebende Wasserdichtigkeit des Trägerunterteils erreicht. So kann weiter das Rahmenteil und / oder das Trägerunterteil aus einem Partikelschaumstoff wie etwa EPP oder EPS bestehen, weiter auch aus Schaumstoffen wie XPS oder Polyurethan.

Auch kann das Dichtband in seinem von der Ausschäumung umfassten, einem zentralen Bereich der Wannenform zugewandten Querschnitts-Endbereich gekrümmt verlaufen. Dies insbesondere zufolge des Ausschäumvorganges. Der seitlich nach außen überragende wesentliche Dichtbandabschnitt ist hiervon grundsätzlich unberührt. Dieser kann den baulichen Gegebenheiten angepasst frei verlegt werden. Es kann aber auch eine besondere Winkelausrichtung des Dichtbandes bei Austritt aus dem Duschwannenaufbau (im Querschnitt) vorgesehen sein, siehe weiter unten. Der umschäumte, d.h. in dem Trägeroberteil eingefasste Dichtbandabschnitt steigt bei gekrümmter Ausbildung entsprechend in einem Querschnitt mit zunehmender Erstreckung in Richtung auf den zentralen Bereich der Wannenform an.

Das geschäumte Trägeroberteil kann unterschiedliche Dichten aufweisen, dies weiter unter Verwendung eines gemeinsamen Grund-Schaumstoffes. So ist bevorzugt vorgesehen, dass im Bereich der Dichtbandeinfassung, d.h. zugeordnet dem umlaufenden Randbereich der Wannenform, ein Schaumstoff höherer Dichte vorgesehen ist als im zentralen Bereich. So kann bspw. der Bereich höherer Dichte durch Anschäumen mit einem sog. Polyurethanschaum mit einem Raumgewicht von 60 - 100 kg/m³ erfolgen, während im zentralen Bereich der Wannenform ein Polyurethanschaum mit einem Raumgewicht von 6 - 30 kg/m³ Anwendung findet. Weiter ist bevorzugt, dass die Wannenform vollständig, ggf. lediglich unter Belassung eines Freiraumes für den Abfluss, ausgeschäumt ist. Entsprechend stützt sich die Wannenform mit der gesamten Fläche auf dem so geschaffenen Tragoberteil ab. Weiter sind hierdurch auch Hohlräume vermieden.

Die Trägerteile, also Trägeroberteil und Trägerunterteil sowie das ggf. zwischengeschaltete Rahmenteil, können sowohl bei einer Trennung entlang einer durchgehenden horizontalen Ebene als auch bei gegenseitigem Eingriff in Form einer Formschlussverbindung miteinander verklebt sein. Diese Verklebung kann bereits im Zuge der Herstellung erfolgen. Alternativ besteht auch die Möglichkeit, diese Verklebung erst vor Ort baustellenseitig vorzunehmen.

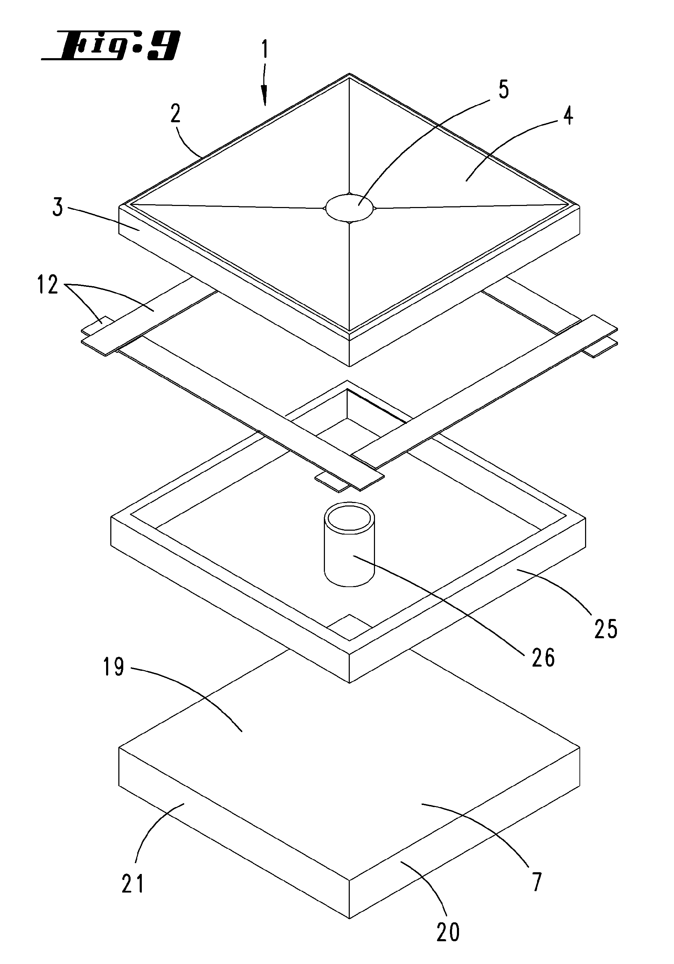

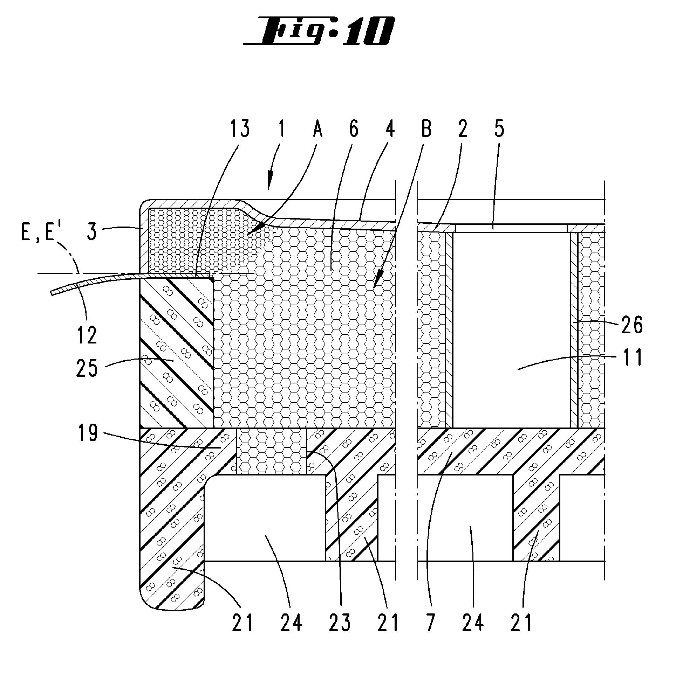

Im Zuge der Herstellung ist es bevorzugt, zunächst die Wannenform mit dem Rahmenteil unter Einspannung des Dichtbandes zwischen dem Rahmenteil und der Wannenform, bei bevorzugter Verklebung des Dichtbandes mit der zugeordneten Stirnfläche des Rahmenteils, gegeneinander zu verspannen. Dies weiter bevorzugt bei auf der Sichtseite liegender Wannenform, so dass sich -rückwärtig- eine nach oben offene Aufnahme ergibt. Hiernach wird zunächst eine Verschäumung im Randbereich der Wannenform mit einem Schaumstoff höherer Dichte vorgenommen, dies unter Einbindung des Dichtbandes bezüglich der der Wannenform zugewandten Seite. Danach erfolgt eine Ausschäumung des verbleibenden (mittigen) Raumes mit einem Schaumstoff niedrigerer Dichte. Eventuell wird über den Rand des Rahmenteils überstehender Schaumstoff -bevorzugt plan- abgeschnitten. Schließlich erfolgt die Verbindung mit dem Trägerunterteil. Diese grundsätzliche Gestaltung, jedoch nicht vorrangig mit der hier beschriebenen Verfahrensweise, ist weiter unten insbesondere im Zusammenhang mit den Figuren 9 und 10 erläutert.

Darüber hinaus kann das Rahmenteil und / oder das Trägerunterteil eine Beschichtung aufweisen. Es kann sich hierbei um eine Polyurethanschicht handeln, die bspw. aufgesprüht ist. Bevorzugt ist die Beschichtung erreicht durch Auftrag einer Dispersionsabdichtung oder einer Abdichtung mit einer Kunststoff-Mörtelkombination.

Die offenbarten Merkmale sind darüber hinaus auch im Zusammenhang mit einem Badewannenaufbau, sowie im Zusammenhang mit einem Verfahren zum Erstellen eines solchen Badewannenaufbaus zu sehen. So kann ein Badewannenaufbau gleiche Merkmale aufweisen, bzw. nach dem gleichen Verfahren erstellt sein, wie der beschriebene Duschwannenaufbau.

Nachstehend ist die Erfindung anhand der beigefügten Zeichnung, welche lediglich mehrere Ausführungsbeispiele darstellt, näher erläutert. Es zeigt:
- Fig. 1: einen Duschwannenaufbau in perspektivischer Explosionsdarstellung, eine erste Ausführungsform betreffend;
- Fig. 2: eine Querschnittdarstellung durch den Duschwannenaufbau der ersten Ausführungsform;
- Fig. 3: eine der Fig. 2 entsprechende Querschnittdarstellung, eine zweite Ausführungsform betreffend;
- Fig. 4: eine weitere Ausführungsform des Duschwannenaufbaus im Querschnitt;

- Fig. 5: eine vierte Ausführungsform des Duschwannenaufbaus im Querschnitt;
- Fig. 6: die Herausvergrößerung des Bereichs VI in Fig. 5;
- Fig. 7: eine Ausschnittdarstellung im Querschnitt, eine weitere Ausführungsform des Duschwannenaufbaus betreffend;
- Fig. 8: eine der Fig. 7 entsprechende Querschnittdarstellung in einer weiteren Ausführungsform;
- Fig. 9: in perspektivischer Explosionsdarstellung den Duschwannenaufbau einer weiteren Ausführungsform;
- Fig. 10: eine Querschnittdarstellung gemäß Fig. 7, jedoch die Ausführungsform gemäß Fig. 9 betreffend;
- Fig. 11: die Unteransicht gegen ein Trägerunterteil der Ausführungsform gemäß der Figur 9;
- Fig. 12: eine Querschnittdarstellung gemäß Fig. 7, eine weitere Ausführungsform betreffend.

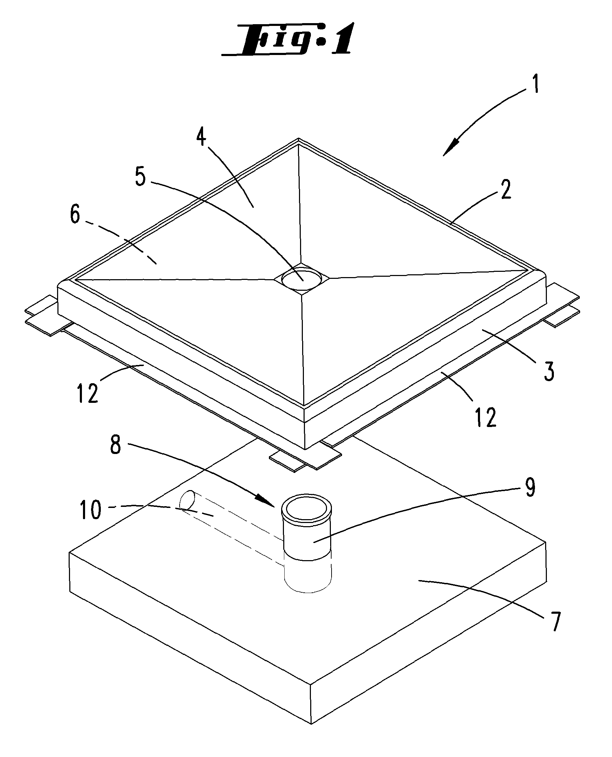

Dargestellt und beschrieben ist zunächst mit Bezug zu der Darstellung in Fig. 1 ein im Wesentlichen aus zwei ggf. erst baustellenseitig zusammensetzbaren Teilen bestehender Duschwannenaufbau 1. Dieser weist zunächst eine den Duschboden bildende Wannenform 2 auf. Diese ist im Grundriss quadratisch geformt und mit einer umlaufenden, einstückig mit der Wannenformfläche 4 ausgebildeten Randabwinklung 3 versehen. Die Wannenformfläche 4 ist ausgehend vom randseitigen Übergang in die Randabwinklung 3 zur Mitte hin geneigt in Richtung auf eine zentrale Ablauföffnung 5.

Die Randabwinklung 3 erstreckt sich in einem Querschnitt durch die Wannenform 2 rechtwinklig zu einer durch die Wannenform-Randkanten aufgespannten Horizontalebene E.

Die Wannenform 2 sitzt im Einbauzustand auf einem Trägerteil T, welches grundrissangepasst ist an die Wannenform 2, weiter angepasst der durch die Randabwinklungen 3 aufgespannten inneren Freifläche.

Das Trägerteil T ist zweigeteilt, bildend ein Trägeroberteil 6 und ein Trägerunterteil 7. Letzteres ist als Formkörper gebildet, so in den dargestellten Ausführungsbeispielen hergestellt auf Basis eines Partikelschaumstoffes. Das Trägerunterteil 7 ist plattenförmig gestaltet, mit einer Randkantenerstreckungslänge, die einem Mehrfachen der hierzu senkrecht gemessenen Dicke des Trägerunterteils 7 entspricht. Eine Unterseite des Trägerunterteils 7 ist ebenflächig ausgebildet im Hinblick auf eine üblicherweise ebenflächig zugeordnete Bauwerksfläche.

Das Trägerunterteil 7 nimmt einen Teil des Abflusses 8 auf, so zentral einen Geruchsverschlussabschnitt 9. Dieser ist zentral der oberen, d.h. dem Trägeroberteil 6 zugewandten Trägerunterteil-Breitfläche zugeordnet angeordnet, wobei ein fußseitiger Bereich des Geruchsverschlussabschnitts 9 in dem Trägerunterteil 7 eingebettet ist. Der Geruchsverschlussabschnitt 9 ragt über die dem Trägeroberteil 6 zugeordnete Breitfläche des Trägerunterteils 7 hinaus, dies mit einem freien Axialmaß, welches dem Abstandsmaß zwischen Oberfläche des Trägerunterteils 7 und Unterseite der wannenformseitigen Ablauföffnung 5 im Einbauzustand entspricht.

Innerhalb des Trägerunterteils 7 ist weiter eine an dem Geruchsverschlussabschnitt 9 angeschlossene, seitlich bis hin zu einer Schmalwandseite des Trägerunterteils 7 sich erstreckende und in der entsprechenden Trägerunterteilfläche frei mündende Abflussrohrleitung 10 eingebunden. Diese kann mit einem Gefälle von bspw. 1 % in dem Trägerunterteil 7 gehaltert sein.

Das Trägeroberteil 6 ist durch eine Hinterschäumung der Wannenform 2 erreicht. Dieses Hinterschäumen bzw. Ausschäumen der Wannenform 2 erfolgt mittels eines Polyurethan-Schaumstoffes, wobei der so erzeugte, unmittelbar mit der Wannenform 2 verbundene Schaumstoffkörper beim Ausführungsbeispiel sich bis über die durch die freien Randkanten der Randabwinklung 3 aufgespannte Ebene E hinaus erstreckt, dies bspw. mit einem Maß, welches einem Sechstel bis einem Drittel der quer zur Ebene E gemessenen Höhe der Randabwinklung 3 entspricht. Dieser Schaumstoffkörper kann aber auch nur bis zu der Ebene der freien Randkanten sich hin erstrecken oder sogar - von der Wannenform ausgehend gesehen - hinter der Ebene der freien Randkanten der Randabwinklung 3 zurückbleiben.

Zur Ausschäumung bzw. zur Bildung des Trägeroberteils 6 ist bevorzugt ein Polyurethan-Schaumstoff mit einem Raumgewicht von 60 - 100 kg/m³ gewählt.

Die Ausschäumung ist weiter so vorgenommen, dass zentral in axialer Zuordnung zu der wannenformseitigen Ablauföffnung 5 eine der Aufnahme des trägerunterteilseitigen Geruchsverschlussabschnittes 9 dienende Abflussaussparung 11 verbleibt.

Zum dichtenden Anschluss des Duschwannenaufbaus 1 bei bevorzugtem bodenebenen Einbau zum den Duschwannenaufbau 1 umgebenden Fußboden ist weiter ein Dichtband 12 vorgesehen. Hierbei handelt es sich zunächst um die Anordnung von vier den Seitenrändern des Duschwannenaufbaus 1 zugeordneten Dichtbändern, die randseitig zum Anschluss an den umgebenden Fußboden überstehen. In den Wannenform-Eckbereichen sind die einzelnen Dichtbänder 12 überlappend angeordnet.

Die Dichtbänder 12 sind mittels der den frei überstehenden Dichtbandabschnitten abgewandten Endbereichen in dem Trägeroberteil 6 gefesselt. Dies ist erreicht durch Umschäumen - oder auch nur Anschäumen von der Seite der Wannenform aus - dieser, dem zentralen Bereich der Wannenform 2 zugewandten Querschnitts-Endbereiche 13 im Zuge der Herstellung des Trägeroberteils 6. Entsprechend sind diese Endbereiche 13 durch den gebildeten Schaumstoffkörper gefasst, was eine unverlierbare und flüssigkeitsdichte Anordnung der Dichtbänder 12 an der mit dem Trägeroberteil 6 verbundenen Wannenform 2 ergibt. Ein Dichtband selbst ist bevorzugt auch dampfdicht gebildet. Zugleich ergibt sich hierdurch in vorteilhafter Weise eine Andichtung, das heißt ein dichtendes Zusammenhaften der Endbereiche 13 und des Trägeroberteils 6. Zugleich wird hierdurch die erforderliche Dichtigkeit und der Ausgleich der durch die Randabwinklung gegebenen "Hohlraum-Geometrie" erreicht.

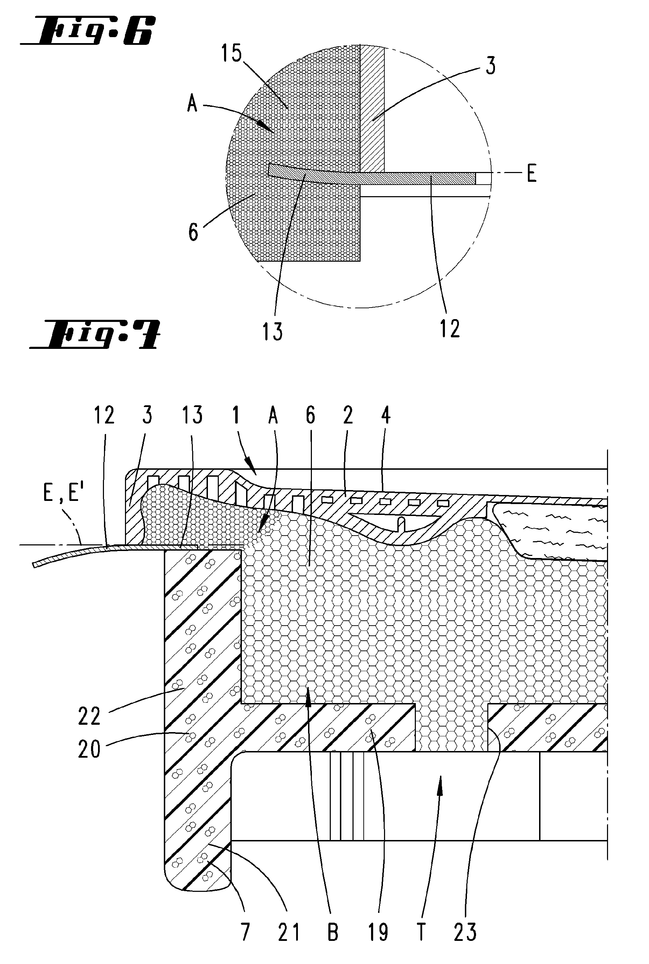

Die Dichtbänder 12 erstrecken sich im Wesentlichen in einer parallelen Ebene zu der durch die Randabwinklung 3 aufgespannten Ebene E, weiter, wie bspw. in Fig. 6 dargestellt, in einer Ebene unmittelbar unterhalb der freien Randkante der Randabwinklung 3 und sind im Wesentlichen horizontal nach außen geführt.

Wie weiter aus der vergrößerten Darstellung in Fig. 6 zu erkennen, kann der umschäumte und gefasste Querschnitts-Endbereich 13 eines Dichtbandes 12 gekrümmt verlaufen, dies weiter unter Bildung eines nach oben, d.h. in Richtung auf die Unterseite der Wannenform 2 gerichteten Kurvenabschnitts.

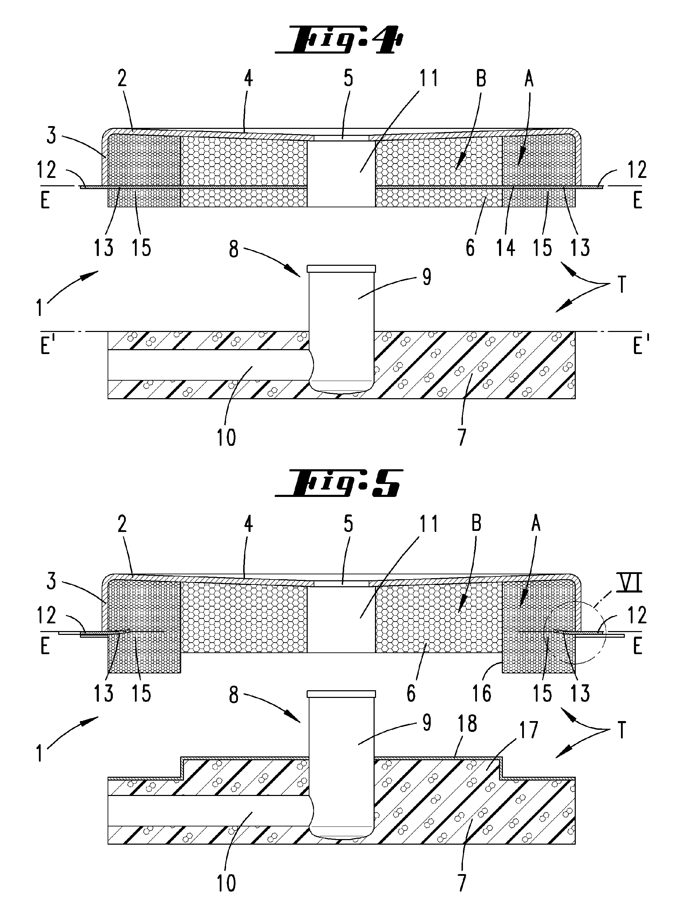

Das Dichtband 12 kann, wie in der Ausführungsform gemäß der Darstellung in Fig. 4 gezeigt, ein Teilbereich einer durchgehenden Dichtfolie 14 sein. Diese erstreckt sich unter Berücksichtigung der in dem Trägeroberteil 6 belassenen Abflussaussparung 11 innerhalb des geschäumten Trägeroberteils 6, unter randseitig freiem Auslippen der Dichtbandabschnitte. Die Dichtfolie 14 ist entsprechend gleichfalls durch Umschäumen, gegebenenfalls aber auch nur Anschäumen, wie grundsätzlich weiter oben erläutert, mit dem Trägeroberteilmaterial fixiert.

Hinsichtlich des umlaufenden Dichtbandes 12 kann dieses in üblicher Weise, wie auch beschrieben, aus einzelnen Streifen bestehen, die dann in den Eckbereichen sich überlappend angeordnet sind und auch in der Überlappung gesondert miteinander verklebt sind (so dass sie dann über die gesamte Breite miteinander verklebt sind). Es kann sich aber auch um ein integral ausgebildetes Dichtband handeln, wie bspw. die beschriebene Dichtfolie 14, weiter aber auch durch Ausstanzung eines integralen Dichtbandes aus einem entsprechenden breiten Band. Weiter kann das Dichtband auch aus einzelnen Streifen hergestellt sein, die in den Eckbereichen, etwa entlang einer Diagonalen, miteinander verklebt oder verschweißt sind.

Soweit vor- und nachstehend der dichtende Verbund mit dem umgebenden Fußbodenaufbau angesprochen ist, bezieht dies natürlich auch einen dichtenden Verbund mit aufstehenden Wänden ein. Etwa bei Einbau eines Duschwannenaufbaus 1 in einer Raumecke ist an zwei Seiten die Abdichtung mit einer aufsteigenden Wand vorzunehmen.

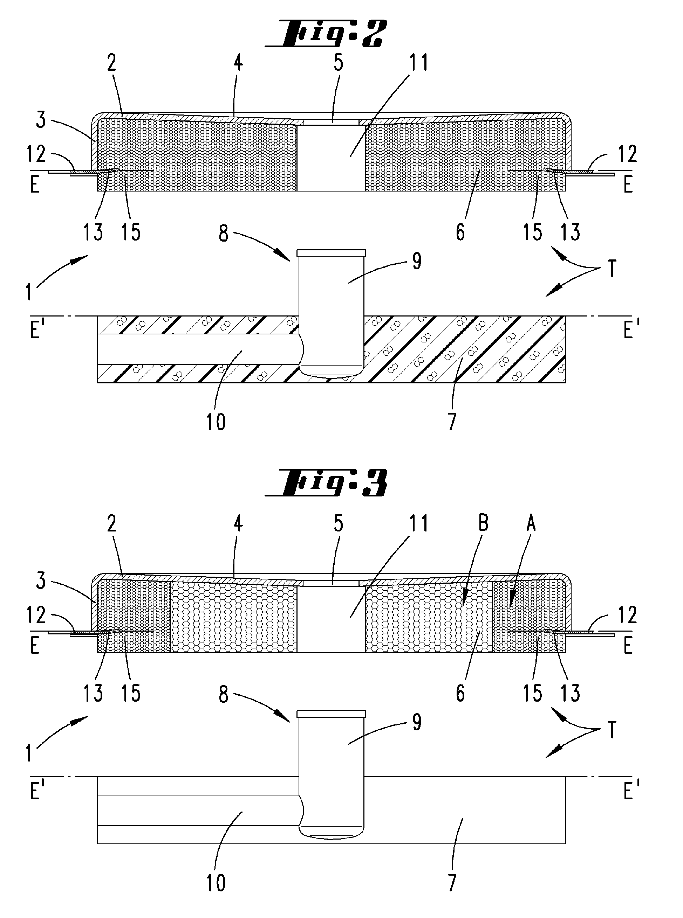

Wie in der in den Figuren 1 - 3 dargestellten ersten Ausführungsform kann das Trägeroberteil 6 durch Aus- bzw. Hinterschäumen der Wannenform 2 mit nur einem Polyurethan-Schaumstoff erfolgen. Alternativ besteht auch die Möglichkeit, lediglich den umlaufenden Randbereich des Trägeroberteils 6 aus einem Polyurethan-Schaumstoff höherer Dichte A (Raumgewicht etwa 60 -100 kg/m³) zu bilden, welcher Schaumstoffbereich höherer Dichte A zugleich das Dichtband 12 einfasst (siehe weitere Ausführungsbeispiele in den Figuren 3 - 6). Der innere Trägeroberteilbereich ist ausgeschäumt mit einem Polyurethan-Schaumstoff geringerer Dichte B, so bspw. mit einem Polyurethanschaum mit einem Raumgewicht von 6 - 30 kg/m³.

Trägeroberteil 6 und Trägerunterteil 7 werden entweder werksseitig oder alternativ auch erst baustellenseitig zusammengefügt, dies unter vollflächiger Abstützung des Trägeroberteils 6 auf dem Trägerunterteil 7. So ist zunächst gemäß den in den Figuren 1 - 4 gezeigten Ausführungsbeispielen eine Verklebung von Trägeroberteil 6 und Trägerunterteil 7 vorgesehen, wobei die Klebe- bzw. Trennebene zwischen den beiden Teilen in einer durchgehenden horizontalen Ebene E' vorgesehen ist, welche Ebene E' parallel versetzt mit senkrechtem Abstand unterhalb der durch die freien Randkanten der Randabwinklung 3 aufgespannten Ebene E liegt.

Weiter kann die dem Trägeroberteil 6 zugewandte obere Breitfläche des Trägerunterteils 7 mit einer Beschichtung 18 versehen sein, so bspw. mit einer, vorteilhafterweise auch sogleich Dichtfunktion entfaltenden, Beschichtung in Form einer Dispersionsbeschichtung oder einer Beschichtung mit einer Kunststoffmörtelkombination.

Auch kann die Fügung von Trägeroberteil 6 und Trägerunterteil 7 gemäß dem Ausführungsbeispiel in den Figuren 5 und 6 im Sinne eines gegenseitigen Eingriffs der Teile gegeben sein. So ist in dem dargestellten Ausführungsbeispiel der Bereich der Dichtbandeinfassung 15, welcher Bereich durch Ausschäumen mit einem Polyurethanschaum höherer Dichte A geschaffen ist, mit einer senkrecht zur Ebene E' betrachteten größeren Höhe versehen als der mittlere Trägeroberteilbereich, welcher aus einem Schaumstoff mit niedrigerer Dichte B besteht. So ergibt sich zugewandt dem Trägerunterteil 7 im Übergang zwischen zentralem Trägeroberteilabschnitt und dem Bereich der Dichtbandeinfassung 15 eine umlaufende Stufe 16, in die eine höhenangepasste, weiter dem Grundriss des inneren Trägeroberteilbereiches entsprechende Erhebung 17 des Trägerunterteils 7 eingreift, zur Bildung einer formschlüssigen Verbindung, die weiter noch durch Verkleben der Teile miteinander unterstützt sein kann.

Über die Höhe des Trägerunterteils 7 ist eine Anpassung des bodeneben einzubauenden Duschwannenaufbaus 1 an den umliegenden Fußbodenaufbau erreichbar. Je nach Gegebenheit wird ein Trägerunterteil 7 geringerer oder größerer Höhe verwendet.

Weiter alternativ kann in einer weiteren Ausführungsform die trägerunterteilseitige Erhebung 17 in ihrer Vertikalerstreckung gleich der Vertikalerstreckung des randseitigen, die Dichtbandeinfassung 15 bildenden Schaumstoffbereiches des Trägeroberteils 6 sein. So ist in diesem Fall das Trägeroberteil 6 gebildet durch rahmenartiges Hinterschäumen der Wannenform 2 mit einem Schaumstoff höherer Dichte A. Der innere rückwärtige Bereich der Wannenform 2 ist entsprechend nicht ausgeschäumt. In diesen greift dann die höhenangepasste Erhöhung 17 zum Ausfüllen des wannenformunterseitigen Freiraums. Entsprechend stützt sich bei einer solchen Ausgestaltung die Wannenform 2 im zentralen Bereich unmittelbar auf dem Trägerunterteil 7 ab.

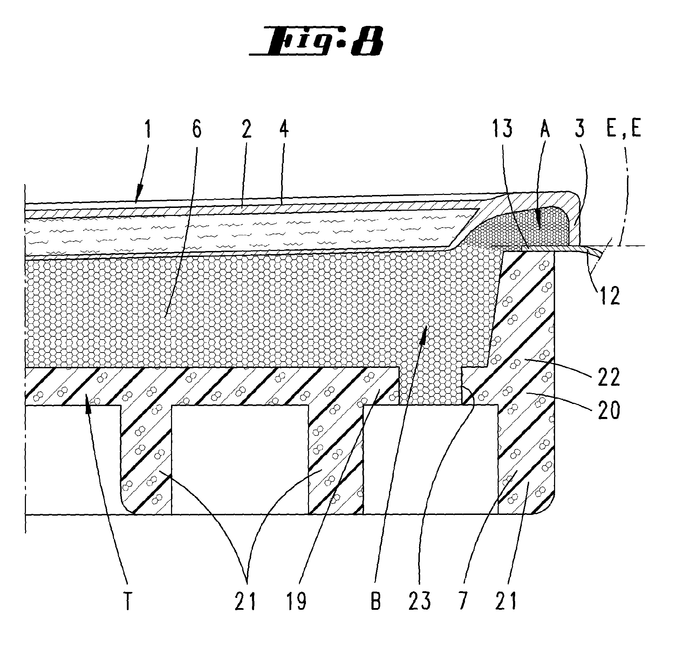

Die Figuren 7 und 8 zeigen weitere Ausführungsformen eines Duschwannenaufbaus 1. Hier bildet das Trägerunterteil 7 eine Wanne zur Bildung eines zentralen Hohlraums aus, welcher Hohlraum ausgeschäumt ist. Das Trägerunterteil 7 besitzt hierzu zunächst einen parallel zur Aufstandsfläche ausgerichteten Trägerunterteilboden 19. Dieser ist vertikal beabstandet zu der Wannenform 2. Der Trägerunterteilboden 19 ist etwa mittig einer umlaufenden, senkrecht zum Boden 19 ausgerichteten Trägerunterteilwandung 20 angeordnet. Entsprechend formt die Trägerunterteilwandung 20 unterseitig des Bodens 19 Stege 21 zur Abstützung auf dem Rohfußboden aus. Derartige Stege sind auch zur weiteren Unterstützung des Trägerunterteilbodens 19 innerhalb des von der umlaufenden Wandung 20 aufgespannten Bereichs vorgesehen.

Der sich vom dem Trägerteilboden 19 senkrecht nach oben erstreckende, umlaufende Wandungsabschnitt 22 ist der Randabwinklung 3 der Wannenform 2 zugeordnet, wobei die durch die freie Stirnfläche des Wandungsabschnittes 22 aufgespannte Ebene E' in etwa mit der durch die freie Randkante der Randabwinklung 3 aufgespannten Ebene E zusammenfällt.

Das Dichtband 12 ist mit seinem inneren Querschnitts-Endbereich 13 entlang der freien Stirnrandkante der Randabwinklung 3 an dieser verhaftet, so insbesondere durch Verklebung, weiter ggf. auch zusätzlich oder alternativ im Bereich der nach oben in Richtung auf die Wannenform 2 weisenden Stirnfläche des Wandungsabschnittes 22.

Der dem Querschnitts-Endbereich 13 des Dichtbandes 12 zugeordnete, durch die Randabwinklung 3, dem die Wannenformfläche 4 bildenden Wannenformabschnitt und dem Wandungsabschnitt 22 des Trägerunterteils 6 nach außen begrenzte, Hohlraum ist mit einem Schaumstoff höherer Dichte A ausgeschäumt. Über diesen ist zudem, bedingt durch die gegebenen Klebeeigenschaften des Polyurethan-Schaumstoffes, eine Verklebung von Wannenform 2 und Trägerunterteil 7 unter Einfassung des Querschnitts-Endbereiches 13 des Dichtbandes 12 gegeben. Der Schaumstoff höherer Dichte A ragt von der Randabwinklung 3 abweisend nach innen in den durch das Trägerunterteil 7 begrenzten Hohlraum unterseitig der Wannenform 2 ein.

Der übrige Hohlraum ist mittels eines Polyurethan-Schaumstoffes geringerer Dichte B ausgefüllt. Die Beschickung des Hohlraumes mit diesem Schaumstoff B erfolgt durch trägerunterteilbodenseitige Schaumdurchtrittsöffnungen 23, welche nach einem Ausschäumen durch den Schaumstoff B verschlossen sind.

Das Trägerunterteil 7 dient im Zuge der Herstellung der Duschwannenanordnung 1 als verlorene Schalung für den einzubringenden Schaumstoff A bzw. B.

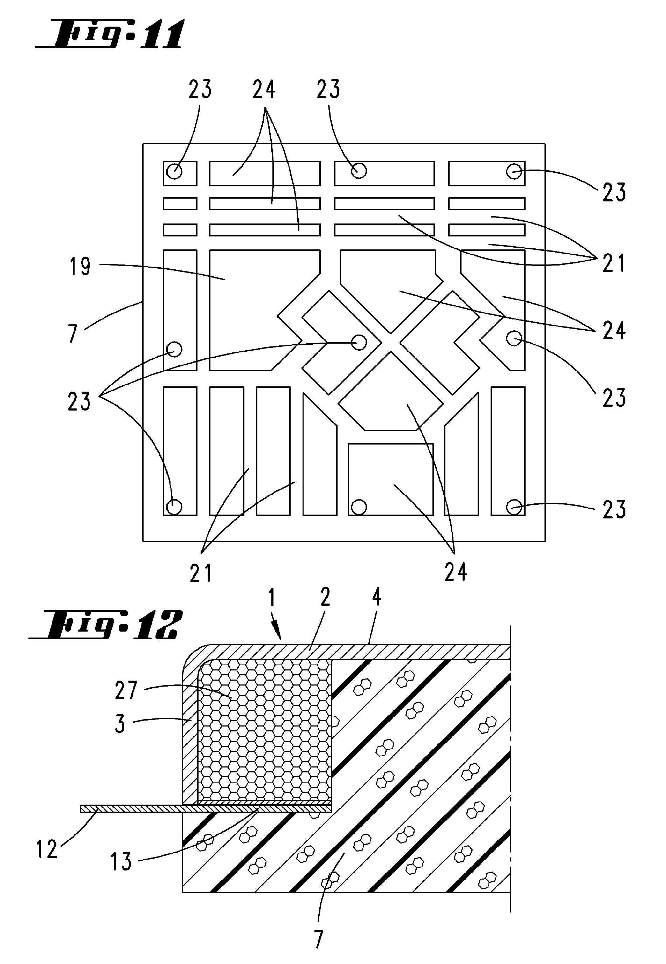

Eine weitere Ausführungsform einer erfindungsgemäßen Duschwannenanordnung 1 zeigen die Figuren 9 bis 11. In dieser Variante ist der Trägerunterteilboden 19 zugewandt der Wannenform 2 eben ausgebildet. Die umlaufende Trägerunterteilwandung 20 erstreckt sich lediglich von dem Trägerunterteilboden 19 nach vertikal unten zur Abstützung des Trägerunterteils 6 auf dem Rohboden. Auch in dieser Ausführungsform sind, wie weiter aus der Unteransicht des Trägerunterteils 7 in Fig. 11 zu erkennen, mehrere Stege 11 über die bodenunterseitige Fläche verteilt vorgesehen, welche bodenunterseitig umlaufend begrenzte Ausnehmungen 24 belassen. Diese Ausnehmungen 24 dienen zur Fortsetzung eines trägeroberteilseitigen bzw. wannenformseitigen Abflusses, wozu entsprechend der Positionierung des Ablaufes und gewünschtem Verlauf der Ablaufleitung in dem Trägerunterteil 7 verschiedene Stege 21 zur Aneinanderreihung verschiedener Ausnehmungen 24 herausgebrochen bzw. herausgeschnitten werden.

Weiter ist, wie in Fig. 11 zu erkennen, das Trägerunterteil 7 mit mehreren Schaumdurchtrittsöffnungen 23 versehen. In dem dargestellten Ausführungsbeispiel sind jedem Eckbereich des Trägerunterteils 7 eine Schaumdurchtrittsöffnung 23 zugeordnet, weiter jeweils eine Schaumdurchtrittsöffnung 23 mittig einer parallel zur Trägerunterteilrandkante verlaufenden, die Eck-Schaumdurchtrittsöffnungen 23 verbindenden Linie und schließlich eine Schaumdurchtrittsöffnung 23 zugeordnet dem zentralen Bereich des Bodens 19.

Diese Schaumdurchtrittsöffnungen 23 ermöglichen die Ausschäumung insbesondere nach bereits erfolgter Zusammensetzung von Wannenform, Rahmenteil und Trägerunterteil. Wenn, wie weiter vorne beschrieben, die Ausschäumung vor dem Zusammensetzen einer zunächst gebildeten Kombination von Wannenform und Wannenteil mit dem Trägerunterteil vorgenommen wird, sind entsprechend diese Durchtrittsöffnungen nicht erforderlich oder können noch zum Ausschäumen von verbleibenden Restöffnungen genutzt werden.

Der die Wannenform 2 tragende Wandungsabschnitt ist in dieser Ausführungsform durch ein Rahmenteil 25 gebildet. Dieses besteht, wie auch das Trägerunterteil 7, aus einem Partikelschaumstoff wie bspw. EPS. Das Rahmenteil 25 steht mit einer umlaufenden Stirnfläche auf dem Trägerunterteilboden 19 unter vertikal fluchtender Ausrichtung der Außenfläche mit der Außenfläche des bodenteilseitig umlaufenden Stegs 21.

Entsprechend formen in dieser Ausführungsform Trägerunterteil 7 und Rahmenteil 25 die Wanne zur Bildung des vom Schaumstoff A bzw. B auszufüllenden Hohlraumes, womit sowohl Trägerunterteil 7 als auch Rahmenteil 25 als verlorene Schalung dienen. Wenn, wie in einer oben beschriebenen Variante vorgesehen, nur das Rahmenteil als verlorene Schalung dient, erfolgt bevorzugt vor Zusammensetzung mit dem Trägerunterteil ein planes Abschneiden eventuell überstehenden Schaumstoffs (niedrigerer Dichte) aufgrund gegebenenfalls vorangegangenen Ausschäumens des mit der Wannenform verbundenen Rahmenteils.

Zur Erstellung einer solchen Duschwannenanordnung 1 wird zunächst das Rahmenteil 25 stirnrandseitig umlaufend mit einem Dichtband 12 bzw. mit mehreren, in den Eckbereichen sich überlappenden Dichtbändern 12 versehen. Die Festlegung des Dichtbandes 12 erfolgt mittels Verklebung, bevorzugt einer Verklebung mit der der Wannenform zugeordneten Stirnfläche des Rahmenteils.

Das Rahmenteil 25 wird mit dem daran festgelegten Dichtband 12 der Wannenform 2 zugeordnet derart, dass die vertikale Außenfläche der Randabwinklung 3 in einer Ebene zu der Außenfläche des Rahmenteils 25 verläuft, dies weiter unter einklemmender Beaufschlagung des zwischen Rahmenteil 25 und umlaufender Randkante der Randabwinklung 3 gefassten, horizontal herausgeführten Dichtbandes 12. Das Dichtband 12 steht betreffend alle Ausführungsformen sowohl gegenüber dem Trägeroberteil wie gegenüber dem Trägerunterteil vor.

Der rückwärtig der Randabwinklung 3 unterseitig durch die umlaufende Stirnfläche des Rahmenteils 25 bzw. des darauf angeordneten Querschnitts-Endbereiches 13 des Dichtbandes 12 begrenzte Hohlraumabschnitt wird mittels eines Schaumstoffes höherer Dichte A gefüllt. Hierdurch erfolgt zugleich eine Verklebung von Wannenform 2 und Rahmenteil 25 mittels des eingebrachten Polyurethan-Schaumstoffes, insbesondere Polyurethanschaum.

Nach dem Ausschäumen des Dichtbandbereiches wird das Trägerunterteil 7 aufgesetzt, dies unter Zwischenschalten eines eine Abflussaussparung 11 freistellenden Einlegeteils 26, bspw. in Form eines rohrartigen Distanzstückes. Letzteres stützt sich einerends unterseitig an der Wannenform 2 und andernends oberseitig an dem Trägerunterteilboden 19. Auch dieses Einlegeteil 26 wirkt in Art einer verlorenen Schalung.

Nach Ansetzen des Trägerunterteils 7 auf das Rahmenteil 25 wird über die Schaumdurchtrittsöffnungen 23 der verbleibende Hohlraum unterhalb der Wannenform 2 mit Schaumstoff niedrigerer Dichte B ausgeschäumt. Der eingebrachte Polyurethan-Schaumstoff bewirkt zugleich eine Verklebung von Wannenform 2, Rahmenteil 25 und Trägerunterteil 7.

Der der Abflussaussparung 11 zugeordnete Bereich des Trägerunterteilbodens 19 kann zur Fortsetzung des in der Abflussaussparung 11 zu positionierenden Abflusses durchbrochen werden.

Fig. 12 zeigt eine weitere alternative Ausführungsform, bei welcher innenseitig der Randabwinklung 3 ein Klemmstück 27 angeordnet ist. Das Klemmstück 27 füllt den Zwickel bevorzugt derart aus, dass das daran befestigte Dichtband 12 sich gerade unterhalb des Stirnrandes der Randabdichtung der Wannenform erstreckt. Das Klemmstück 27 besteht aus einem Schaumstoffmaterial, insbesondere Polyurethan-Schaumstoff. Es kann unmittelbar angeschäumt sein. Der Querschnitt ist beim Ausführungsbeispiel rechtwinklig. Er kann aber auch hiervon abweichen, insbesondere durch das Ausschäumen, zur freien Innenseite hin gerundet oder schräg verlaufend sein. Bezüglich der Randabwinklung und der Unterseite der Wannenform ist die Geometrie hierdurch vorgegeben. Das Klemmstück 27 bildet einen umlaufenden, ggf. mehrteilig ausgeführten Rahmen. Die Unterseite des Klemmstücks 27 ist im Wesentlichen in der durch die freie Randkante der Randabwinklung 3 aufgespannten Ebene E platziert. Diese unterseitige Fläche trägt mittels einer Klebeschicht das im Wesentlichen horizontal nach außen abragende Dichtband 12. Eine Verklebung des Dichtbandes 12 zu dem Trägerunterteil kann vorgesehen sein, ist aber bevorzugt nicht vorgesehen.

Das zuzuordnende Trägerunterteil 17 ist mit einer stufenförmigen Erhebung 17 versehen, zum Ausfüllen des unter der Wannenform 2 zentral freigehaltenen Bereichs. Alternativ kann der verbleibende Hohlraum auch mit Schaumstoff, bspw. Polyurethan-Schaumstoff niedriger Dichte ausgeschäumt werden. Die Erhebung 17 kann mittels Verklebung mit der Wannenform-Unterseite verbunden sein. Es kann sich aber auch lediglich um eine verklebefreie Auflage handeln.

In Zuordnungsstellung des durch Wannenform 2, Klemmstück 27 und Dichtband 12 geschaffenen Trägeroberteils 6 zum Trägerunterteil 7 ist das Dichtband 12, insbesondere der Querschnitts-Endbereich zwischen Klemmstück 27 und der zugeordneten Fläche des Trägerunterteils 7 klemm- und dichtgehaltert.

Hinsichtlich aller beschriebenen Ausführungsformen und Gegenständen der Anmeldung kann auch vorgesehen sein, dass das Dichtband (im Querschnitt) unter einem spitzen Winkel zur Horizontalen aus dem Wannenaufbau seitlich herausgeführt ist. Hierbei ist ein Winkel von bis zu +/- 60° bspw. möglich. Bevorzugt ist bspw. ein Winkel von 45° nach unten bzw. einer Horizontalen. Ungeachtet dessen, sind aber alle Winkel in dem genannten Bereich von bis zu +/- 60° in die Offenbarung einbezogen, insbesondere in 1 Grad-Schritten.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

### Bezugszeichenliste

- 1: Duschwannenaufbau
- 2: Wannenform
- 3: Randabwinklung
- 4: Wannenformfläche
- 5: Ablauföffnung
- 6: Trägeroberteil
- 7: Trägerunterteil
- 8: Abfluss
- 9: Geruchsverschlussabschnitt
- 10: Abflussrohrleitung
- 11: Abflussaussparung
- 12: Dichtband
- 13: Querschnitts-Endbereiche
- 14: Dichtfolie
- 15: Dichtbandeinfassung
- 16: Stufe
- 17: Erhebung
- 18: Beschichtung
- 19: Trägerteilboden
- 20: Trägerteilwandung
- 21: Stege
- 22: Wandungsabschnitt
- 23: Schaumdurchtrittsöffnungen
- 24: Ausnehmungen
- 25: Rahmenteil
- 26: Einlegeteil
- 27: Klemmstück
- A: Schaumstoff höherer Dichte
- B: Schaumstoff niedrigerer Dichte
- T: Trägerteil
- E: Ebene
- E': Ebene

## Patentansprüche

1. Verfahren zur Erstellung eines Wannenaufbaus (1), insbesondere eines Duschwannenaufbaus mit einer Wannenform (2) und einem, eine Ablaufaussparung (11) oder eine Vorbereitung hierzu und / oder einen Abfluss (8) aufweisenden Trägerteil (T), insbesondere eines bodenebenen Duschwannenaufbaus (1), wobei ein randseitig überstehendes Dichtband (12) eingebunden wird, **dadurch gekennzeichnet, dass** die Wannenform (2) einen Rand, insbesondere eine Randabwinklung (3) aufweist und dass die Wannenform (2) mit einem gesonderten Trägerunterteil (7) verbunden wird, wobei ein verbleibender Hohlraum zwischen Wannenform (2) und Trägerunterteil (7) mit einem Schaumstoff niedriger Dichte (B) ausgeschäumt wird, wobei weiter die Ausschäumung mit einem Schaumstoff höherer Dichte (A) durch Einbringen eines Polyurethan-Werkstoffs mit elastomeren Eigenschaften ersetzt sein kann.

2. Verfahren nach den Merkmalen des Oberbegriffs des Anspruchs 1 oder nach Anspruch 1, **dadurch gekennzeichnet, dass** das horizontal unter dem Rand, insbesondere der Randabwinklung (3), herausgeführte Dichtband (12) mittels eines Klemmstücks (27) klebend und dichtend mit dem Trägerteil (T) verbunden wird, wobei ein so vorbereitetes Trägeroberteil (6) wahlweise, ggf. erst auf einer Baustelle, mit einem gesonderten Trägerunterteil (7) verbunden wird.

3. Verfahren nach einem oder mehreren der vorhergehenden Ansprüche oder insbesondere danach, **dadurch gekennzeichnet, dass** die Ausschäumung mittels eines Polyurethan-Schaumstoffes durchgeführt wird.

4. Verfahren nach einem oder mehreren der vorhergehenden Ansprüche oder insbesondere danach, **dadurch gekennzeichnet, dass** das Dichtband (12) in seinem von der Ausschäumung umfassten, einen zentralen Bereich der Wannenform (2) zugewandten Querschnitts-Endbereich (13) gekrümmt verläuft.

5. Verfahren nach einem oder mehreren der vorhergehenden Ansprüche oder insbesondere danach, **dadurch gekennzeichnet, dass** die Ausschäumung des Hohlraumes der Wannenform (2) mit unterschiedlichen Dichten vorgenommen wird und -bevorzugt- dass im Bereich der Dichtbandeinfassung (15) ein Schaumstoff höherer Dichte (A) vorgesehen ist und/oder dass zunächst im Bereich des Dichtbandes (12) eine Ausschäumung mit einem Schaumstoff höherer Dichte (A) durchgeführt wird.

6. Verfahren nach einem oder mehreren der vorhergehenden Ansprüche oder insbesondere danach, **dadurch gekennzeichnet, dass** die Ausschäumung im Bereich des Dichtbandes (12) nach Aufsetzen eines Rahmenteils (25) durchgeführt wird und -bevorzugt- dass nach einem Ausschäumen des Dichtbandbereiches das Trägerunterteil (7) aufgesetzt wird und die Ausschäumung im verbleibenden Bereich zwischen dem Trägerunterteil (7) und der Wannenform (2) durchgeführt wird.

7. Wannenaufbau, vorzugsweise Duschwannenaufbau (1), insbesondere bodenebener Duschwannenaufbau, mit einer Wannenform (2) und einem, eine Abflussaussparung (11) oder eine Vorbereitung hierzu und / oder einen Abfluss (8) aufweisenden Trägerteil (T), wobei die Wannenform (2) vorzugsweise hinterschäumt ist und ein randseitig überstehendes Dichtband (12) eingebunden ist, **dadurch gekennzeichnet, dass** das Trägerteil (T) zweiteilig ausgebildet ist, wobei ein Trägeroberteil (6) und ein Trägerunterteil (7) gesondert ausgebildet ist, und dass das Dichtband (12) in ein Trägerteil, bevorzugt das Trägeroberteil, oder in einer Trennebene zwischen dem Trägeroberteil (6) und dem Trägerunterteil (7) eingebunden ist.

8. Wannenaufbau nach einem der vorhergehenden Ansprüche oder insbesondere danach, **dadurch gekennzeichnet, dass** das Trägeroberteil (6) zumindest teilweise durch Hinterschäumung der Wannenform gebildet ist.

9. Wannenaufbau nach einem der vorhergehenden Ansprüche oder insbesondere danach, **dadurch gekennzeichnet, dass** die Wannenform eine Randabwinklung aufweist.

10. Wannenaufbau nach einem der vorhergehenden Ansprüche oder insbesondere danach, **dadurch gekennzeichnet, dass** das Dichtband durch Ausschäumen mit einem Schaumstoff höherer Dichte (A) eingebunden ist und
- bevorzugt- dass ein zentraler Bereich des Trägeroberteils (6) und/oder des Trägerunterteils (7) im Vergleich zu dem jeweiligen Außenbereich durch einen Schaumstoff geringer Dichte (B) gebildet ist und/oder dass der Bereich des Schaumstoffs höherer Dichte (A), ggf. auch nur teilweise, durch einen Polyurethan-Werkstoff mit elastischen Eigenschaften gebildet ist.

11. Wannenaufbau nach einem der vorhergehenden Ansprüche oder insbesondere danach, **dadurch gekennzeichnet, dass** das horizontal unter den Rand, insbesondere unter die Randabwinklung (3) der Wannenform herausgeführte Dichtband (12) mittels eines Klemmstücks (27) klebend und dichtend mit dem Trägerteil (T) verbunden ist und dass das so vorbereitete Trägeroberteil (6) einem gesonderten Trägerunterteil (7) zuordbar ist.

12. Wannenaufbau nach einem der vorhergehenden Ansprüche oder insbesondere danach, **dadurch gekennzeichnet, dass** das Trägerunterteil (7) die Abflussaussparung (11) oder die Vorbereitung hierzu und / oder den Abfluss (8) fortsetzt und -bevorzugt-, dass das Trägerunterteil (7) mittels eines Rahmenteils (25) mit dem Trägeroberteil (6) verbunden ist und/oder dass das Rahmenteil (25) und / oder das Trägerunterteil (7) im Sinne einer verlorenen Schalung eingebunden ist.

13. Wannenaufbau nach einem der vorhergehenden Ansprüche oder insbesondere danach, **dadurch gekennzeichnet, dass** das Rahmenteil (25) und / oder das Trägerunterteil (7) eine oder mehrere Schaumdurchtrittsöffnungen (23) aufweist und -bevorzugt- dass das Dichtband (12) ein Teilbereich einer durchgehenden Dichtfolie (14) ist und/oder dass die Trennung zwischen Trägerunterteil (7) und Trägeroberteil (6) entlang einer durchgehenden horizontalen Ebene (E') vorgesehen ist oder dass die Trennung im Sinne eines gegenseitigen Eingriffs von Trägeroberteil (6) und Trägerunterteil (7) gegeben ist.

14. Wannenaufbau nach einem der vorhergehenden Ansprüche oder insbesondere danach, **dadurch gekennzeichnet, dass** das Trägeroberteil (6) zumindest teilweise aus einem Polyurethan-Schaumstoff besteht und -
- bevorzugt- dass das Rahmenteil (25) und/oder das Trägerunterteil (7) aus einem Partikelschaumstoff besteht und/oder dass das Dichtband (12) in seinem von der Ausschäumung bzw. Umschäumung umfassten Endbereich gekrümmt verläuft und/oder dass das Trägeroberteil (6) unterschiedliche Dichten aufweist.

15. Wannenaufbau nach einem oder mehreren der Ansprüche 10 bis 21 oder insbesondere danach, **dadurch gekennzeichnet, dass** im Bereich der Dichtbandeinfassung (15) ein Schaumstoff höherer Dichte (A) vorgesehen ist und -bevorzugt- dass die Trägerteile (6, 7, 25) verklebt sind und/oder dass das Rahmenteil (25) und / oder das Trägerunterteil (7) eine Beschichtung (18) aufweist.
